# EUROPEAN PATENT SPECIFICATION

(11) **EP 3 101 728 B1**
(45) Date of publication and mention of the grant of the patent: **03.04.2019**
(21) Application number: 16001158.1
(22) Date of filing: 20.05.2016
(51) Int. Cl.: H01Q 1/12

(54) **GLASS ANTENNA FOR VEHICLE AND REAR WINDOW GLASS WITH GLASS ANTENNA FOR VEHICLE**
SCHEIBENANTENNE FÜR EIN FAHRZEUG UND HECKSCHEIBENGLAS MIT SCHEIBENANTENNE FÜR EIN FAHRZEUG
ANTENNE DE VERRE POUR VÉHICULE ET LUNETTE ARRIÈRE DOTÉE D'UNE TELLE ANTENNE

(30) Priority: 05.06.2015 JP 2015114724
(43) Date of publication of application: 07.12.2016
(73) Proprietor: AGC Inc., Tokyo 100-8405 (JP)
(72) Inventor: Araki, Toshimitsu, Tokyo 100-8405 (JP); Hayashi, Takuji, Tokyo 100-8405 (JP); Mikamo, Koki, Tokyo 100-8405 (JP); Ogo, Suguru, Tokyo 100-8405 (JP); Kishimoto, Yuki, Tokyo 100-8405 (JP)
(74) Representative: Müller-Boré & Partner Patentanwälte PartG mbB

(56) References cited:
- EP-A1- 2 207 239
- EP-A1- 2 458 672
- EP-A1- 2 581 983
- EP-A1- 3 101 733
- US-A1- 2004 056 810
- US-A1- 2007 279 301

## Description

The present invention relates to a rear window glass for a vehicle, comprising a glass antenna that receives vertically polarized waves, and a vehicle comprising the rear window glass.

In recent years, a glass antenna for a vehicle has been known, which is capable of receiving digital audio broadcasting (Digital Audio Broadcasting: DAB). A frequency band for the DAB includes two different frequency bands, which are a band III that is from 174 MHz to 240 MHz; and an L-band that is from 1452 MHz to 1492 MHz.

Radio waves for the DAB are polarized in the vertical direction, so that an antenna for the DAB is formed of a pattern where a vertical component is elongated. For example, in the example of Patent Document 1, which is depicted in FIG. 1, a glass antenna 30 including two antenna elements formed of vertical patterns, respectively, is installed in a rear glass 80, so that radio waves of the DAB, which are vertically polarized and which use two separated frequency bands, can be received.

In general, a defogger (defogging heater wire) 4 for removing dew condensation by using an electrically heated wire 42 is also installed, so that a visual field can be maintained.
Patent Document 1: WO 2013/094470
US 2004/056810 A1 discloses a glass antenna and a glass antenna system using the same.
US 2007/279301 A1 discloses a window-integrated antenna in vehicles.
EP 2 207 239 A1 discloses an automotive glass antenna.
EP 2 581 983 A1 discloses a window-glass antenna for a vehicle.
EP 3 101 733 A1 discloses a glass antenna.
EP 2 458 672 A1 discloses a vehicular antenna apparatus and a window glass.

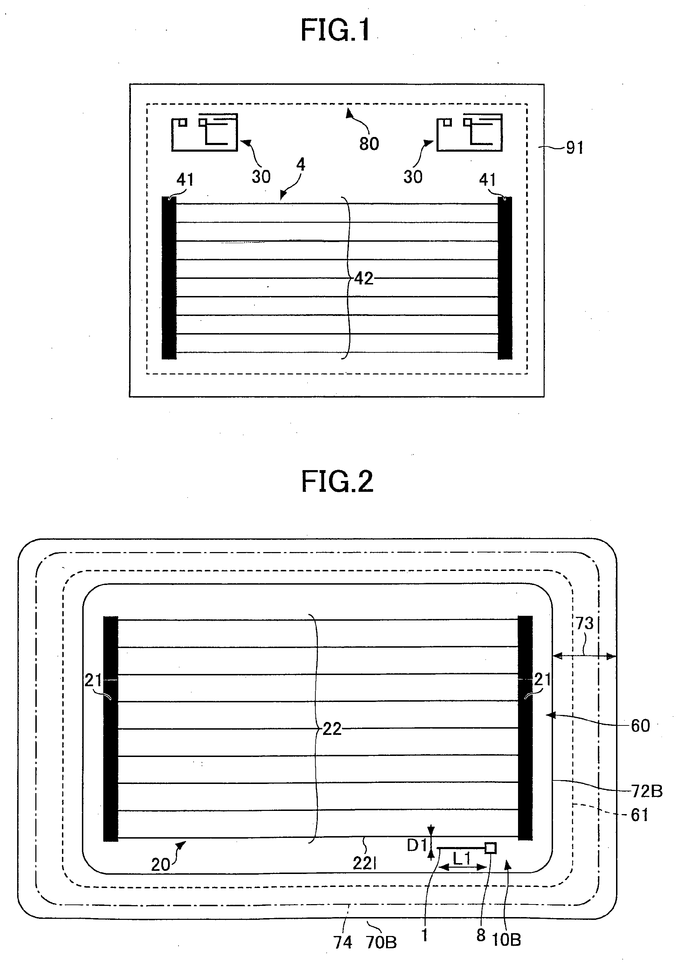

It is assumed that the antenna configured according to Patent Document 1 is to be applied to a vehicle with rear glass (e.g., a sedan (saloon)) where a percentage of a part of the rear glass 80 occupied by the defogger 4 with respect to the whole rear glass 80 is small, and an angle of installation of the rear glass is small (e.g., from 10 degrees to 50 degrees with respect to the ground). For a case where the angle of installation of the rear glass is small, even if a defogger having a predetermined size is provided, a space remains in the window glass (the upper portion in FIG. 1), so that the antenna 30 including antenna elements extended in the longitudinal direction (the vertical direction) can be installed in the space.

For a hatchback car, which a type of a vehicle with a flip-up rear door or a horizontally openable rear door (a rear surface door), an angle of installation of the rear glass tends to be large (e.g., from 40 degrees to 90 degrees). As the angle of installation becomes large, a vertical size of the window glass becomes smaller, so that a percentage of a part of the window occupied by a defogger, which is for ensuring a favorable visual field by defogging, with respect to the whole window becomes large. As the percentage of the part of the rear glass occupied by the defogger with respect to the whole rear glass becomes large, a space other than the space for the heated wire becomes smaller, so that it can be difficult to reserve a space for installing an antenna in the rear glass.

In view of the above-described circumstances, an object of the present invention is to provide a glass antenna for a vehicle such that, even if a percentage of a part of window glass occupied by a defogger with respect to the whole window glass is large, receiver sensitivity with respect to radio waves of the DAB, which are vertically polarized waves, can be ensured.

According to an aspect of the present invention, there is provided a rear window glass for a vehicle, comprising an electric heating type defogger installed in the rear window glass, and a glass antenna for receiving a vertically polarized wave of DAB, wherein the defogger includes a plurality of heater lines extending in a horizontal direction, the heater lines being arranged from a lower side of the rear window glass to an upper side of the rear window glass; and a plurality of bus bars extending in a vertical direction at a left edge portion of the window glass and at a right edge portion of the window glass, and that feed power to the plurality of heater lines, wherein the glass antenna is disposed at an upper portion or a lower portion with respect to the defogger, at least, at one of the left edge portion and the right edge portion of the rear window glass, wherein the glass antenna includes a core side feeding point; and a first antenna element extending from the core side feeding point in the horizontal direction, wherein, if a wavelength at a center frequency of a received frequency band in air is λ, a glass wavelength shortening coefficient is k, and a wavelength on the rear window glass is λ_{g} =λ·k, a conductor length of the first antenna element is less than or equal to (1/6)·λ_{g}, and wherein a distance between the first antenna element and a first heater line that extends linearly in the horizontal direction from the bus bar at the left edge portion of the window glass to the bus bar at the right edge portion of the window glass and that is closest to the first antenna element among the plurality of heater lines is less than or equal to (1/40)·λ_{g}.

According to the present invention, the glass antenna of the rear window glass for a vehicle can ensure receiver sensitivity with respect to radio waves of the DAB, which are vertically polarized waves, even if a percentage of a part of window glass occupied by a defogger with respect to the whole window glass is large.

### BRIEF DESCRIPTION OF THE DRAWINGS

FIG. 1 is a plan view of a rear window glass of a vehicle, in which an antenna is installed;
FIG. 2 is a plan view of a whole rear glass in which a vehicle antenna according to an embodiment of the present invention is installed;
FIG. 3 is a plan view of the whole rear glass where a ground side feeding point is installed in the vehicle antenna illustrated in FIG. 2;
FIG. 4 is a plan view of the whole rear glass in which a vehicle antenna according to another embodiment of the present invention is installed;
FIG. 5 is a plan view of the whole rear glass in which a vehicle antenna according to another embodiment of the present invention is installed;
FIG. 6 is a plan view of the whole rear glass in which a vehicle antenna according to another embodiment of the present invention is installed;
FIG. 7 is a plan view of the whole rear glass in which a vehicle antenna according to a further embodiment of the present invention is installed;
FIG. 8A is a graph illustrating antenna gain at frequencies of a band III while varying a length of an antenna element of the vehicle antenna, which is illustrated in FIG. 3;
FIG. 8B is a plot illustrating a correlation between the length of the antenna element and average gain in the band III;
FIG. 9A is a graph illustrating antenna gain at the frequencies of the band III while varying a distance between the antenna element of the vehicle antenna, which is illustrated in FIG. 3, and a defogger;
FIG. 9B is a plot illustrating a correlation between the distance between the antenna element and the defogger and average gain in the band III;
FIG. 10A is a graph illustrating antenna gain at the frequencies of the band III while varying a vertical line length of heater lines of the defogger in the vehicle antenna, which is illustrated in FIG. 5;
FIG. 10B is a plot illustrating a correlation between the vertical line length of the heater lines of the defogger and a minimum value of the gain;
FIG. 11A is a graph illustrating, for the vehicle antenna illustrated in FIG. 7, antenna gain at the frequencies of the band III while varying a conductor length of an inner antenna element and a conductor length of an outer antenna element; and
FIG. 11B is a graph illustrating, for the vehicle antenna illustrated in FIG. 7, antenna gain at frequencies of an L band while varying the conductor length of the inner antenna element and the conductor length of the outer antenna element.

An embodiment of the present invention is described below by referring to the accompanying drawings. Note that, in the drawings for describing the embodiment, it is assumed that, if a direction is not particularly described, the direction refers to the direction on the drawings. The drawings represent views when a surface of window glass is viewed while facing the surface, i.e., the drawings represent views when the window glass is installed in a vehicle, and when the window glass is viewed from inside the vehicle (or from outside the vehicle). In the drawings, the left/right direction (the lateral direction) corresponds to the horizontal direction, and the up/down direction corresponds to the vertical direction. However, the drawings may be referred to as the views when the window glass is viewed from outside the vehicle. For example, if the window glass is rear glass that is installed in a rear part of the vehicle, the left/right direction on the drawings corresponds to a vehicle width direction. Further, the window glass according to the embodiment of the present invention may be mainly rear glass that is installed in a rear part of a vehicle. Furthermore, for directions, such as a parallel direction and a perpendicular direction, a deviation may be allowed to the extent that the effect of the present invention is maintained.

In the embodiment of the present invention, window glass is an example of a cover that covers an opening of a vehicle body. The window glass may be a plate-shaped member; and the material of the plate-shaped member is not limited to the glass, and the material may be a resin, or a film, for example. Rear window glass 60 (which may also be referred to as window glass or rear glass) is attached to a vehicle body opening (which may also be referred to as an opening), which is formed of a flange of a vehicle body. An outer peripheral edge of the window glass 60 is depicted by the dashed line in FIG. 2. The reference numeral 71 indicates an edge of the vehicle body flange forming the window opening of the vehicle body.

FIG. 2 is a plan view of a glass antenna 10B (which may also be referred to as a vehicle glass antenna, or a vehicle antenna) according to the embodiment of the present invention. The vehicle glass antenna (an antenna included in the window glass by printing, embedding, or attaching, for example) includes a feeding point and an antenna conductor, which are provided as a planar conductor pattern in the vehicle window glass 60.

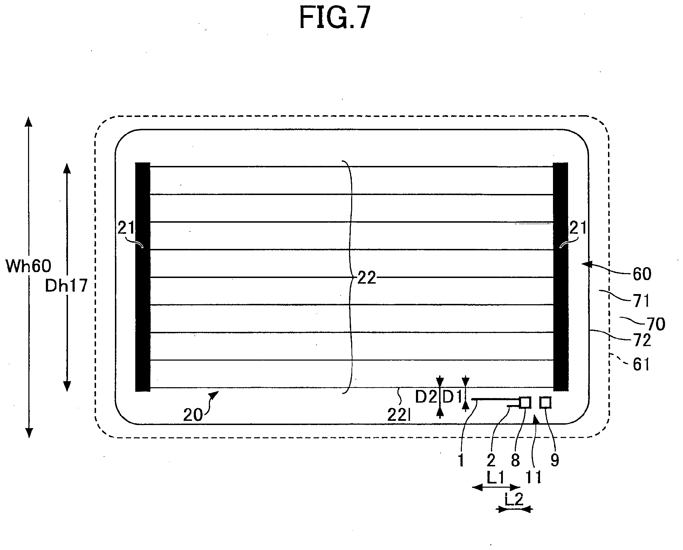

The glass antenna 10B includes the feeding point (a core side feeding point) 8; and an element (a first line-shaped element) 1 that extends in the horizontal direction from the feeding point 8, as the starting point. Radio waves in the L band can be received by the antenna element 1; however, if gain in the L band is low, an antenna element 2 may be provided, as illustrated in FIG. 7.

The rear glass (rear window glass) 60 is window glass provided with an outer peripheral part 61, which is to be attached to a flange 71 (or a resin panel 73) formed in a metal rear door or the vehicle body 70. A peripheral edge of the rear glass 60 is depicted by the dotted line.

In FIG. 2, the reference numeral 72B indicates an opening (second opening) for viewing backward. The metal rear door or the vehicle body 70B opens widely (the first opening 74), the resin panel 73 is formed to cover the opening 74, and the resin panel 73 is opened (the second opening 72B), so that a rear view can be seen. The rear glass 60 is attached to the resin panel 73, which is attached to the rear door or the vehicle body 70B; and the rear glass 60 covers the opening 72B (second opening).

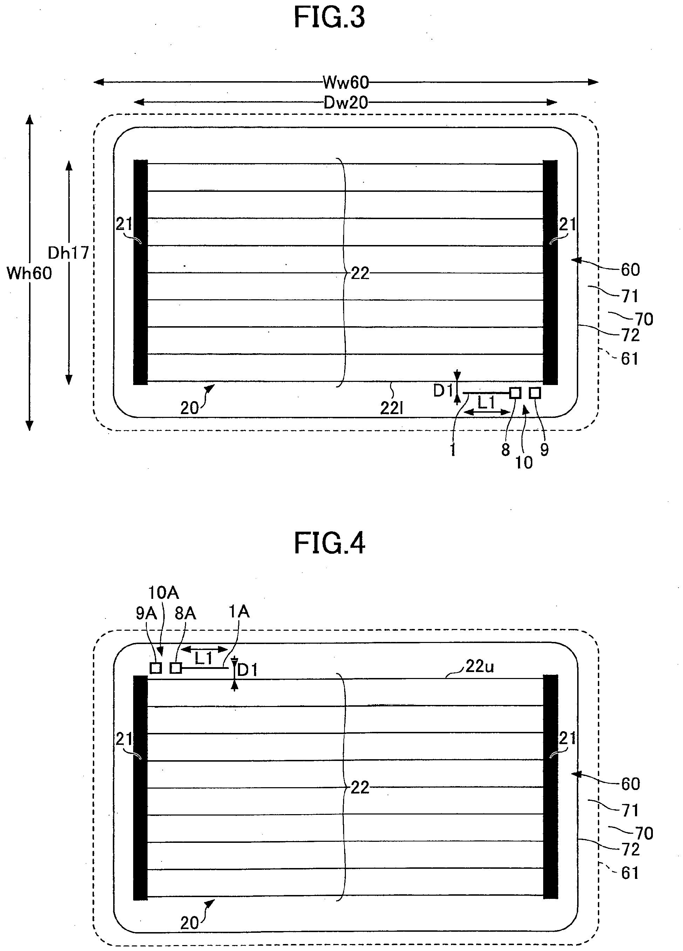

Alternatively, in FIG. 3, the reference numeral 72 indicates an opening for viewing backward. The opening 72 is formed by the flange 71, which is a window frame of the rear glass 60.

In FIG. 3, the opening 72 is formed of an edge portion of the opening of the metal rear door (a hatchback car) or the vehicle body 70 (a sedan). The rear glass 60 is attached to the rear door or the vehicle body 70, and the rear glass 60 covers the opening 72.

In FIGS. 4 to 7, configurations that are similar to the configuration of FIG. 3 are illustrated. However, as illustrated in FIG. 2, the configuration according to any one of FIGS. 4 to 7 may include the resin panel 73.

The rear glass 60 may be provided with a defogger (DEF) 20 including a plurality of heater lines 22 arranged in parallel; and a plurality of belt-shaped bus bars 21 for supplying power to the heater lines 22. The heater lines 22 and the bus bars 21 included in the defogger 20 are electric heating type conductive patterns. FIG. 2 shows a configuration where the glass antenna 10B is disposed in a space below the defogger 20 in the rear glass 60.

The glass antenna 10B is formed in a planar fashion on the surface of the window glass. The glass antenna 10B may be formed, for example, by printing a pattern on the surface of the window glass facing inside the vehicle by using paste including a conductive metal, such as silver paste, and baking the printed pattern. However, a method of forming the glass antenna 10B is not limited to this method. A linear body or a foil-shaped body formed of a conductive material, such as copper, may be formed on the surface of the window glass facing inside the vehicle or facing outside the vehicle. The linear body or the foil-shaped body may be formed on the window glass by using an adhesive, or the linear body or the foil-shaped body may be formed inside the window glass. The same applies to the defogger 20 that is disposed on the window glass.

The glass antenna 10B includes the feeding point 8 that is positioned at a lower right side of the window glass; and the antenna conductor (the antenna element) 1 connected to the feeding point 8.

The feeding point 8 is for connecting a coaxial cable or an AV line to the antenna conductor 1. The feeding point 8 may be an electrode formed on the rear glass 60 such that, upon the rear glass 60 being attached to the flange 71, the feeding point 8 is positioned in the vicinity of a corner portion of the flange 71.

In FIG. 2, a black shielding film (not depicted in the figures) may be formed on the surface of the window glass 60, and a portion of or all the antenna conductor may be formed on the shielding film. For the shielding film, ceramics may be used, such as a black ceramics film. In this case, when the window glass 60 is viewed from outside the vehicle, the portion of the antenna conductor formed on the shielding film is invisible from outside the vehicle due to the shielding film, whereby the window glass having superior design can be obtained.

The glass antenna 10B (an example of a vehicle antenna) illustrated in FIG. 2 is a monopolar antenna (a monopole antenna), and a received signal obtained from the antenna conductor can be output from the feeding point 8 at the core side (a hot side). The received signal is transmitted to a receiver (not depicted). For the case of the monopolar antenna, an opening of the vehicle body of the vehicle to which the window glass 60 is attached and/or a portion in the vicinity of the opening may preferably be a portion that can be used as ground (so-called body grounding can be achieved).

The glass antenna 10B is configured, so that the power feeding point 8 may preferably be disposed in the vicinity of a side edge portion of the rear door or the vehicle body 70 (or the resin panel 73).

The feeding point 8 (feeder) is electrically connected to a feeder line that is connected to the receiver. When an AV line is used as the feeder line, the feeding point 8 and an amplifier installed at the vehicle side are connected, so that body grounding can be achieved by the ground of the amplifier. In this case, by a configuration where a connector for electrically connecting the AV line and the feeding point 8 is implemented in the feeding point 8, the AV line can be easily attached to the feeding point 8.

In the glass antenna 10B according to the embodiment of the present invention, the feeding point is not limited to the monopolar, and the glass antenna 10B may be a bipolar antenna including two feeding points. For example, as in the embodiments of the present invention that are illustrated in FIGS. 3 to 7, a ground side feeding point 9 illustrated in FIG. 3 may be formed in the window glass 60. An inner conductor (the core line) of a coaxial cable is electrically connected to the feeding point 8 (the core side feeding point), and an outer conductor of the coaxial cable and the ground side feeding point 9 are electrically connected. By a configuration where a connector for electrically connecting the core line of the coaxial cable and the feeding point 8 is implemented in the feeding point 8, and a connector for electrically connecting the outer conductor of the coaxial cable and the ground side feeding point 9 is implemented in the ground side feeding point 9, the coaxial cable can be easily attached to the feeding point 8 and to the ground side feeding point 9.

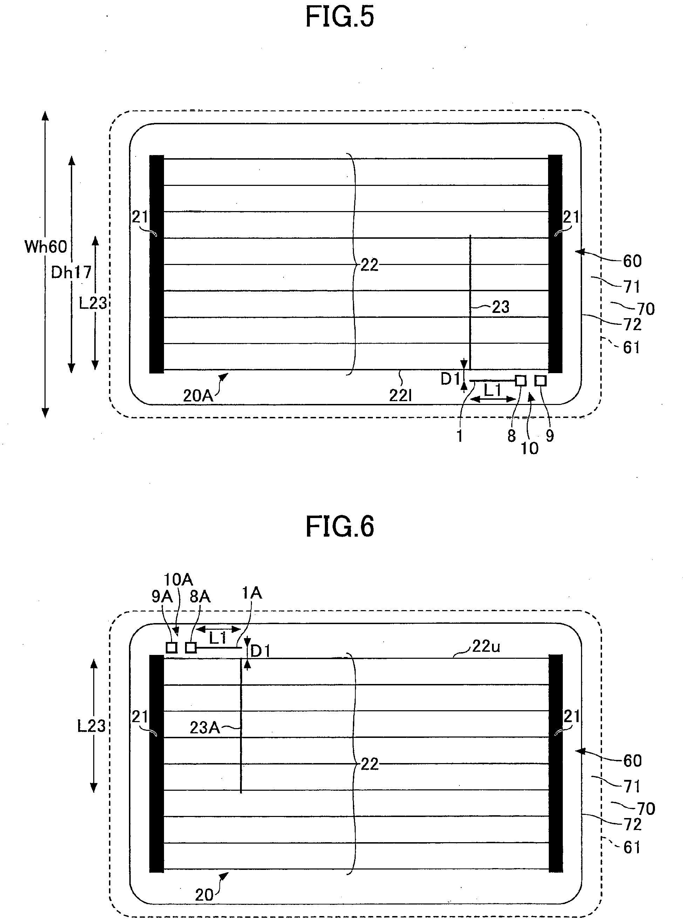

The ground side feeding point 9 may be disposed close to the feeding point 8 in the vicinity of the feeding point 8, so that the ground side feeding point 9 does not contact the feeding point 8, and that the ground side feeding point 9 does not contact the antenna conductor that is electrically connected to the feeding point 8, such as the antenna elements 1 and 2. For the case of FIG. 3, the ground side feeding point 9 is disposed at a right side of the feeding point 8, while the ground side feeding point 9 is separated from the feeding point 8 by a predetermined distance. As in the embodiments of FIGS. 4 and 6, for example, the ground side feeding point 9 may be disposed at the left side of the feeding point 8.

For a case where an amplifier circuit for amplifying a received signal that can be output from the feeding point 8 is formed inside the connector that is implemented in the feeding point 8, the ground of the amplifier circuit may preferably be electrically connected to the ground portion of the outer conductor of the coaxial cable; the feeding point 8 may preferably be electrically connected to the input side of the amplifier circuit; and the inner conductor of the coaxial cable may preferably be connected to the output side of the amplifier circuit.

The shape of the feeding point 8 may be determined depending on a tip shape of the feeder line directly attached to the feeding point 8, or a shape of a connector for connecting the feeding point 8 to the feeder line (e.g., a shape of the surface on which the connector is installed, or a shape of a contact terminal). For example, for implementation, the shape of the feeding point 8 may preferably be a rectangular shape, such as a square, an approximate square, a rectangle, or an approximate rectangle; or a polygonal shape. Here, the shape of the feeding point 8 may be a circular shape, such as a circle, an approximate circle, an oval, or an approximate oval.

The shape of the ground side feeding point 9 illustrated in FIG. 3 may be any shape, similar to the case of the feeding point 8. The clearance between the feeding point 8 and the ground side feeding point 9 may be determined depending on the tip shape of the feeder line directly attached to the feeding point 8 and a tip shape of the feeder line directly attached to the ground side feeding point 9, or the shape of the connector for connecting the feeding point 8 to the feeder line and a shape of a connector for connecting the ground side feeding point 9 to the feeder line (e.g., a shape of the surface on which the connector is installed, or a shape of a contact terminal).

In FIG. 2, the feeding point 8 having a square shape is illustrated. The connecting point for connecting the feeding point 8 and the antenna element is at the left side of the feeding point 8. Alternatively, as illustrated in FIGS. 4 and 6, the antenna element 1A may be connected from the right side of the feeding point 8.

As described below, in the embodiment of the present invention, a glass antenna may be obtained by providing a conductor layer formed of antenna conductors inside a synthetic resin film or on a surface of the synthetic resin film, and by forming the synthetic resin film with the conductor layer on a surface of the window glass facing inside the vehicle or on a surface of the window glass facing outside the vehicle. Additionally, a glass antenna may be obtained by forming, on a surface of a window glass facing inside the vehicle or on a surface of the window glass facing outside the vehicle, a flexible circuit board in which the antenna conductor is formed.

### <Embodiment>

FIGS. 2 and 3 are plan views of the whole rear glass on which the vehicle antenna according to the embodiment of the present invention is installed.

Specifically, in the frequency band of the DAB where the bandwidth is broad and vertically polarized waves are used, suppose that the wavelength in the air at the center frequency of the first frequency band (the band III), which is at a lower band, is λ₀₁; that a wavelength shortening coefficient of the window glass is k; and that the wavelength on the window glass is λ_{g1} = λ₀₁·k. At this time, if the conductor length L1 from the feeding point 8 to the tip of the first antenna element 1 (i.e., the longest path length) is less than or equal to (1/6)·λ_{g1}, a favorable result can be obtained to enhance the antenna gain in the first frequency band. The conductor length L1 may more preferably be less than or equal to (1/8)·λ_{g1}.

For example, the center frequency of the band III (from 174 MHz to 240 MHz) is 207 MHz. Thus, for a case where the antenna gain in the band III is desired to be enhanced, the conductor length L1 may be adjusted to be less than or equal to 155 mm, and more preferably less than or equal to 116 mm, where the speed of the radio waves is 3.0 × 10⁸ m/s, and the wavelength shortening coefficient k is 0.64. Details are described in Example 1.

Namely, according to the shape of the glass antenna 10, the conductor length of the first antenna element L1 (the longest path length) may preferably be adjusted based on a length for causing resonance at the first broadcast frequency band.

In the embodiment, the antenna element 1 is described that extends in the horizontal direction. However, the direction in which the antenna element 1 is extended is not limited to the horizontal direction. For example, for a case where the heater line at the lower most position is inclined, or the heater line at the lower most position is curved, the antenna element 1 may be installed, so that the antenna element 1 is parallel to the inclined heater line, or the antenna element 1 is parallel to the curved heater line.

Further, parallel or vertical may include an error in the inclination to the extent of approximately ±50 degrees. Alternatively, within the range of the above-described conductor length, the antenna element 1 may be bent or curved within a range in which an end portion of the antenna element 1 that does not contact the feeding point 8 does not contact the heater line at the lower most position or at the upper most position, and the end portion of the antenna element 1 does not contact the edges of the window glass 60.

Here, since radio waves used for the DAB are vertically polarized waves, it has been known that by installing a vertical antenna element with a suitable conductor length, the reception gain can be enhanced.

However, as illustrated in FIG. 2, if the defogger 20 occupies a large proportion of the rear glass, an antenna element that extends in the vertical direction may not be installed, as the glass antenna. Furthermore, in the horizontal direction, the defogger 20 is installed in almost entire range (Dw) of the width (Ww) of the window, so that there is almost no space for installing the antenna at the outer side of each of the side edges (the bus bars) of the defogger 20.

Thus, in the embodiment of the present invention, the glass antenna is configured, so that radio waves of the DAB, which are vertically polarized waves, can be received by causing the antenna element extending in the horizontal direction and the heater line of the defogger 20 extending in the horizontal line to be capacitively coupled. Upon being capacitively coupled with the antenna, the defogger 20 can function as a part of the antenna.

With such a configuration, radio waves of the DAB, which are vertically polarized waves, can be received without providing a vertical antenna element, as the glass antenna. However, to finely adjust the reception characteristic of the capacitively coupled antenna element 1 for receiving vertically polarized radio waves of the DAB, a vertical antenna element may be provided.

In the embodiment of the present invention, it is assumed that the wavelength in the air at the center frequency of the above-described first frequency band, which is at the lower band, is λ₀₁; that the wavelength shortening coefficient of the window glass is k; and that the wavelength on the window glass is λ_{g1} = λ₀₁·k. At this time, if the distance D1 from the heater line 221 to the first antenna element 1 is less than or equal to (1/40)·λ_{g1}, a favorable result can be obtained to enhance the antenna gain for the first frequency band. Furthermore, the distance D1 may more preferably be less than or equal to (1/48)·λ_{g1}.

For example, the center frequency of the band III (from 174 MHz to 240 MHz) is 207 MHz. Thus, if it is desired to enhance the antenna gain for the band III, the distance D1 may be adjusted to be less than or equal to 23.2 mm; more preferably less than or equal to 19.3 mm, where the speed of the radio waves is 3.0 × 10⁸ m/s, and the wavelength shortening coefficient k is 0.64. Details are described in Example 2.

Here, the opening 72 is formed of an edge portion of the opening of the metal rear door or the vehicle body; or an edge portion of the resin panel attached to an inner side of the opening of the metal rear door or the vehicle body.

Since the antenna element is formed of a metal, the characteristic of the antenna element may be lowered if the antenna element contacts a metal. Since the edge portion of the opening 72 is formed of a metal, the edge portion of the opening 72 may adversely affect the characteristic of the glass antenna. Additionally, if the rear glass is attached to cover the edge portion of the resin panel, the characteristic of the glass antenna may be adversely affected because an adhesive having conductivity may be used.

If the glass antenna contacts the opening, the reception characteristic may be lowered regardless of whether the opening is formed of a metal or a resin. Thus, the glass antenna may preferably be formed at an inner side of the opening.

Here, a size of a window of a commercially available vehicle is described. For a normal car (wagon type or sedan type medium-sized cars and compact cars, other than SUVs and RVs), the appearance height (vertical height) of the rear window glass is approximately from 260 mm to 330 mm, regardless of the rear shape. In contrast, for an SUV (RV), even for medium-sized cars, the vehicle height is large, and the appearance height of the rear window glass is approximately from 370 mm to 400 mm.

Here, if the rear shape of the vehicle is a hatchback (wagon types, SUVs, etc.) the height of the window glass (vertical size) is small, corresponding to the installation angle of the window glass with respect to the ground, which is greater than the installation angle of the window glass for a sedan. For example, for a sedan shape, the vertical size of the window glass is approximately from 650 mm to 700 mm; however, for a hatchback shape, the vertical size of the window glass is approximately from 350 mm to 500 mm.

In order to reserve a fine field of view, a defogger having a predetermined size may be required. If the vertical size of the window glass is reduced, an area of the window glass occupied by the defogger becomes greater, correspondingly. For example, for a hatchback, the ratio of an area occupied by the defogger with respect to the opening of the window glass is approximately from 75% to 95%, whereas for a sedan, the ratio is approximately from 50% to 70%.

Thus, the total percentage of the upper space and lower space (areas where an antenna can be installed) is from 30% to 50% for a sedan; however, for a hatchback, the total percentage of the upper space and lower space (areas where an antenna can be installed) is limited to be from 5% to 25%.

Thus, the compact glass antenna according to the embodiment of the present invention, which can be disposed close to the defogger, and for which the installation area is small, can be more effectively installed in rear glass that is attached to the rear door of a hatchback.

In the embodiment, the distance between the opening 72 of the window glass and the lower end portion of the bus bar is less than the total length of the antenna pattern (the height is small). Namely, the distance between the heater line 22l and a lower edge or an upper edge of the opening 72 of the rear glass 60 facing the heater line 22l is less than the conductor length of the first antenna element 1. Thus, the first antenna element 1 with the above-described conductor length may not be vertically extended.

In the embodiment, by disposing the antenna that is a horizontal pattern close to the defogger, vertically polarized radio waves of the DAB can be received. Thus, the function of the glass antenna can be achieved, without reducing the area occupied by the defogger in the rear glass (e.g., without forming a punched portion).

Note that, since it is preferable that the feeding point 8 be disposed at an unnoticeable position, the feeding point 8 is disposed at a corner portion. Consequently, the first antenna element 1 extends, in the horizontal direction, toward the center line of the window glass in the width direction.

Furthermore, for a case of adding an antenna element to adjust, for example, a frequency characteristic, it suffices if the first antenna element 1 and the second antenna element 2, which mainly receive radio waves, and the feeding points 8 and 9 are disposed inside the opening 72. The element for adjustment may protrude outside the opening 72 toward the flange 71 (or the resin panel 73 of FIG. 2).

### <Another embodiment>

FIG. 4 is a plan view of the whole rear glass in which the vehicle antenna according to another embodiment of the present invention is installed.

The embodiment corresponds to a case where the glass antenna 10 illustrated in FIG. 2 is installed at an upper position, and left and right are inverted. In the embodiment, the first antenna element 1A of the glass antenna 10A is disposed close to the heater line (the first heater line) 22u at the upper most position of the defogger 20. Even in this case, an effect that is the same as the effect of FIG. 3 can be obtained.

In FIGS. 3 to 7, configurations are illustrated where the ground side feeding points 9A (9) are provided. However, as illustrated in FIG. 2, the feeding point may be formed as monopolar.

### <Another embodiment>

FIG. 5 is a plan view of the whole rear glass in which the vehicle antenna according to this embodiment is installed.

In this embodiment, the defogger 20 is provided with a heater vertical line 23 extending in the vertical direction (the direction of the surface of the window). The heater vertical line 23 is disposed to contact the heater line 22l (the first heater line) at the lower most position, which is the closest to the antenna and capacitively coupled with the antenna.

As described above, radio waves of the DAB are vertically polarized waves. Thus, it is more desirable to provide the vertical antenna element.

In the embodiment of the present invention, it is assumed that the wavelength in the air at the center frequency of the above-described first frequency band, which is at the lower band, is λ₀₁; that the wavelength shortening coefficient of the window glass is k; and that the wavelength on the window glass is λ_{g1} = λ₀₁·k. At this time, in order to enhance the antenna gain by including the heater vertical line 23 in the defogger 20, if the length of the heater vertical line 23 that functions as an antenna element in the vertical direction is greater than or equal to 0.15·λ_{g1} and less than or equal to 0.30·λ_{g1}, a favorable result can be obtained to enhance the antenna gain for the first frequency band.

For example, the center frequency of the band III (from 174 MHz to 240 MHz) is 207 MHz. Thus, if it is desired to enhance the antenna gain for the band III, the conductor length L23 of the heater vertical line 23 may be adjusted to be approximately 232 mm, where the speed of the radio waves is 3.0 × 10⁸ m/s, and the wavelength shortening coefficient k is 0.64. Details are described below in Example 3.

In order to achieve the effect of the present invention, a single heater vertical line 23 may be provided, or a plurality of heater vertical lines 23 may be provided.

The reception gain can be more enhanced if the heater vertical line 23 is installed to contact the heater line 22l or the heater line 22u, which is disposed to be closest to the antenna. However, even if the heater line 23 is installed without contacting the heater line 22l and the heater line 22u, if the conductor length satisfies the above-described condition, an effect to enhance the antenna gain can be obtained.

### <Another embodiment>

FIG. 6 is a plan view of the whole rear glass in which the vehicle antenna according to another embodiment of the present invention is installed.

In this embodiment, the defogger 20 is provided with a heater vertical line 23A extending in the vertical direction (the direction of the surface of the window). The heater vertical line 23A is disposed to contact the heater line 22u (the first heater line) at the upper most position, which is the closest to the antenna and capacitively coupled with the antenna.

As described above, radio waves of the DAB are vertically polarized waves. Thus, it is more desirable to provide the vertical antenna element. This embodiment is similar to the above-described embodiment. The heater vertical line 23A of approximately (1/4)·λ_{g1} (approximately 232 mm) may preferably be provided, so that the heater vertical line 23A contacts the heater line 22u at the upper most position, which is capacitively coupled with the antenna installed above.

The other configurations are the same as those of the above-described embodiment. Thus, an effect that is the same as that of the above-described embodiment can be obtained.

### <Further embodiment>

FIG. 7 is a plan view of the whole rear glass in which a vehicle antenna according to a further embodiment of the present invention is installed.

Compared to the glass antenna 10 illustrated in FIG. 3, in this embodiment, a glass antenna 11 includes, in addition to the first antenna element 1 extending from the feeding point 8, a second antenna element 2.

In this embodiment, it suffices if the antenna element 2 extends, from a connection point (as the starting point) at the feeding point 8, which differs from that of the antenna element 1, in the horizontal direction, i.e., extends parallel to the antenna element 1. Additionally, the antenna element 2 extends in a direction that is the same as the direction in which the antenna element 1 extends.

Here, the antenna element 2 does not contact antenna element 1, and the antenna element 2 receives vertically polarized waves in a frequency band that differs from the frequency band of the antenna element 1. Specifically, the antenna element 1 receives broadcast waves in the band III, and the antenna element 2 receives broadcast waves in the L band.

The antenna element 2 is an antenna element for the L band for the digital audio broadcasting. The frequencies of the L band are higher than the frequencies of the band III. Thus, the conductor length of the second antenna element 2 is significantly smaller than the conductor length of the first antenna element 1.

Here, in the frequency bands of the DAB where the bandwidth is broad and radio waves are vertically polarized waves, it is assumed that the wavelength in the air at the center frequency of the L band, as a second frequency band, is λ₀₂; that the wavelength shortening coefficient of the window glass is k; and that the wavelength on the window glass is λ_{g2} = λ₀₂·k. At this time, if the conductor length of the second antenna element 2 is greater than or equal to (1/8)·λ_{g2} and less than or equal to (3/8)·λ_{g2}, a favorable result can be obtained to enhance the antenna gain for the second frequency band. Details are described in Example 4. Here, λ_{g1} and λ_{g2} are collectively referred to as to λ_{g}.

For example, the center frequency of the L band (from 1452 MHz to 1492 MHz) is 1472 MHz. Thus, if it is desired to enhance the antenna gain for the L band, the (longest) path length of the antenna element 2 can be adjusted to be greater than or equal to 16 mm and less than or equal to 48 mm, where the speed of the radio waves is 3.0 × 10⁸ m/s, and the wavelength shortening coefficient k is 0.64.

Namely, according to the shape of the glass antenna 11, the conductor length of the antenna element 2 may preferably be adjusted based on a length for causing resonance at the second broadcast frequency band (the L band).

In the embodiment, the antenna element 2 (an example of the second antenna conductor) is installed to enhance the performance for the L band. However, even if the antenna element 2 is not included, as in the case of the above-described embodiment, sufficient performance for the L band may be obtained.

Here, since a vehicle is a mobile body, a function to select a radio wave (a diversity function) may preferably be included by providing a plurality of antennas, so that one antenna of the plurality of antennas with favorable receiver sensitivity can be selected depending on a location.

Thus, in the embodiment, an antenna having a configuration that is the same as the configuration of the antenna 10 may be provided, so that the antenna is substantially line symmetric to the antenna 10 with respect to the center line of the window glass 60 in the width direction. In this case, in order to avoid mutual interference, the antennas may be disposed to be separated from each other by a predetermined distance (e.g., greater than or equal to 186 mm, which is 0.2 wavelength for 207 MHz). In this manner, by installing a plurality of glass antennas on the window glass 60, and by switching the antennas, the reception performance can be enhanced.

Additionally, a glass antenna for another application, such as for receiving broadcast waves (e.g., television, AM, and FM), may be installed in the rear glass.

As described above, for a case of installing two or more glass antennas according to the embodiment in the rear glass, or for a case of installing the glass antenna according to the embodiment and another antenna, two glass antennas may preferably be installed, in the window glass, on an edge of the window glass except for the position on the diagonal line (for the case of FIG. 3, the other glass antenna may be installed at a lower left side on the lower edge or at an upper right side on the upper edge; and for the case of FIG. 4, the other glass antenna may be installed at a lower left side on the lower edge or at an upper right side on the upper edge).

Furthermore, the glass antenna according to the embodiment of the present invention and another antenna installed at another position (e.g., at an windshield, a shark fin, or a spoiler) may be configured to be switchable.

The glass antenna and the window glass are described above by the embodiments. However, as long as the present invention is encompassed by the appended claims, the present invention is not limited to the above-described embodiments.

For a vehicle glass antenna, which was produced by installing the glass antenna according to the above-described embodiment to actual vehicle window glass (rear glass), an actual measurement result of the antenna gain is described.

The antenna gain was actually measured after the vehicle window glass, in which the glass antenna was formed, was attached to the window frame of the vehicle, which was on a turntable, in a state where a predetermined angle described below was formed between the vehicle window glass and the horizontal plane. The turntable was rotated, so that the radio waves were irradiated onto the window glass from all directions in the horizontal plane.

The feeding point was connected to a network analyzer through an amplifier and a measurement cable, and each connecting point was connected by a connector.

The measurement was performed by rotating the vehicle by 360 degrees in the horizontal direction while adjusting the center of the vehicle, to which the glass antenna was attached, to the axis of rotation of the turntable. The antenna gain data was measured for each rotational angle of 3 degrees, and for each 3 MHz in the frequency band of the band III (from 174 MHz to 240 MHz). The measurement was performed while setting the elevation angle of the transmit position of the radio waves and the elevation angle of the antenna conductor to be approximately in the horizontal direction (when the elevation angle of the surface parallel to the ground is 0 degrees, and when the elevation angle of the zenith direction is 90 degrees, the direction where the elevation angle is 0 degrees). While using the half-wave length dipole antenna as a reference, the antenna gain was normalized so that the antenna gain of the half-wave dipole antenna was 0 dBd.

### ((Example 1))

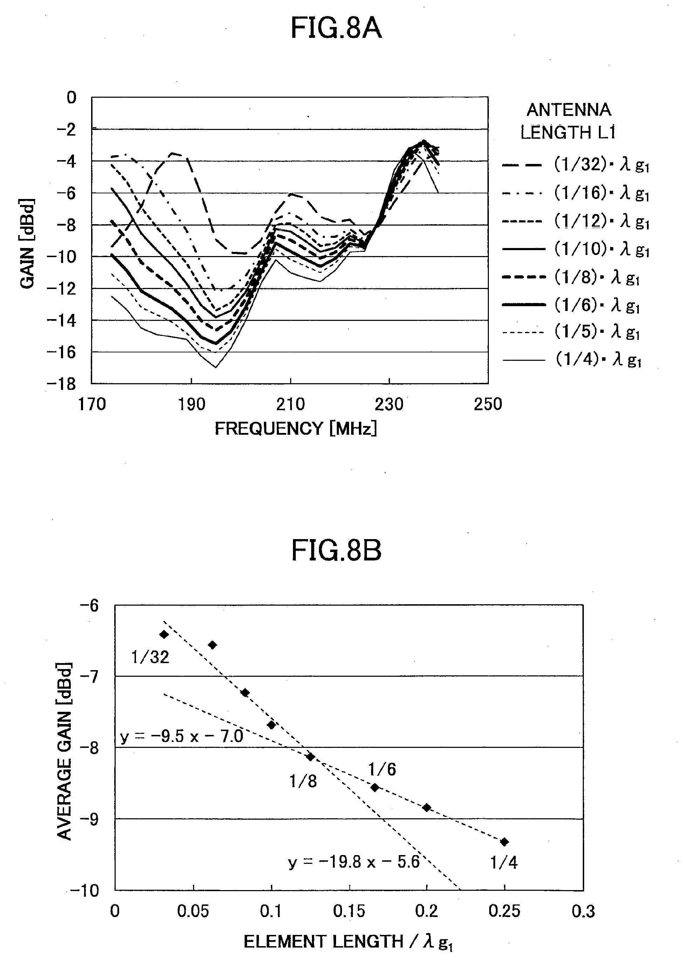

FIG. 8A is a graph indicating the antenna gain for each frequency in the band III while varying a length of the antenna element of the vehicle antenna illustrated in FIG. 3.

FIGS. 8A and 8B, and Table 1 represent actually measured data of the vehicle glass antenna, which was produced by installing the glass antenna 10 according to the embodiment, which is illustrated in FIG. 3, on the rear glass of the actual vehicle. FIG. 8A indicates the average gain for the band III (from 174 MHz to 240 MHz), which was obtained by varying the conductor length L1 [mm] of the antenna element 1 to be (1/32)·λ_{g1}, (1/16)·λ_{g1}, (1/12)·λ_{g1}, (1/10)·λ_{g1}. (1/8)·λ_{g1}, (1/6)·λ_{g1}, (1/5)·λ_{g1}, and (1/4)·λ_{g1}, while fixing the distance D1 between the element and the defogger to be to (1/192)·λ_{g1}, where the horizontal axis represents the frequency [MHz], and the vertical axis represents the average gain [dBd]. The average gain represents an average value that was obtained by averaging the values of the antenna gain, which were obtained by measuring for each rotational angle of 3 degrees in the above-described band.

According to the embodiment of the present invention, there is provided a horizontal pattern (a lateral pattern) where the horizontal component is elongated. In the shape of the embodiment of FIG. 3, the sizes of the window glass, etc., in unit of mm are as follows:
glass vertical height Wh60: 273,
glass horizontal width Ww60: 380,
opening Oh: 330, and
defogger vertical length Dh17: 260, where conductor width of each element is 0.8 mm. Each of the feeding points 8 and 9 has a rectangular shape, where the vertical length is 11 mm, and the horizontal length is 12 mm. It is assumed that the feeding points 8 and 9 are separated by 16 mm.

Here, Table 1 shows, for each conductor length L1 in the graph of FIG. 8A, the average value of the gain over the entire band III.

**[Table 1]**

| Length of antenna | Average |
|---|---|
| (1/32)·λ_{g1} | -6.4 |
| (1/16)·λ_{g1} | -6.6 |
| (1/12)·λ_{g1} | -7.2 |
| (1/10)·λ_{g1} | -7.7 |
| (1/8)·λ_{g1} | -8.1 |
| (1/6)·λ_{g1} | -8.6 |
| (1/5)·λ_{g1} | -8.8 |
| (1/4)·λ_{g1} | -9.3 |

For the conductor length L1 of the first antenna element 1, it can be seen from Table 1 that, as the conductor length L1 becomes shorter, the average gain becomes greater.

FIG. 8B is a plot illustrating a correlation between the length of the antenna element L1 and average gain in the band III. In the plot of FIG. 8B, by drawing an approximate curve of the amount of change of the average gain, as a response to varying the conductor length L1, it can be seen that the gradient is changed at the point of (1/8)·λ_{g1}. It can be seen that, at least for the conductor length L1 that is less than or equal to (1/8)·λ_{g1}, the average gain increases at a high rate, as the conductor length becomes shorter.

FIG. 8A, FIG. 8B, and Table 1 represent actually measured data. Thus, by considering an error on the measurement, the conductor length L1 of the antenna element 1 may preferably be less than or equal to (1/6)·λ_{g1}. Furthermore, as illustrated in FIG. 8B, the conductor length L1 of the antenna element 1 may more preferably be less than or equal to (1/8)·λ_{g1}.

### ((Example 2))

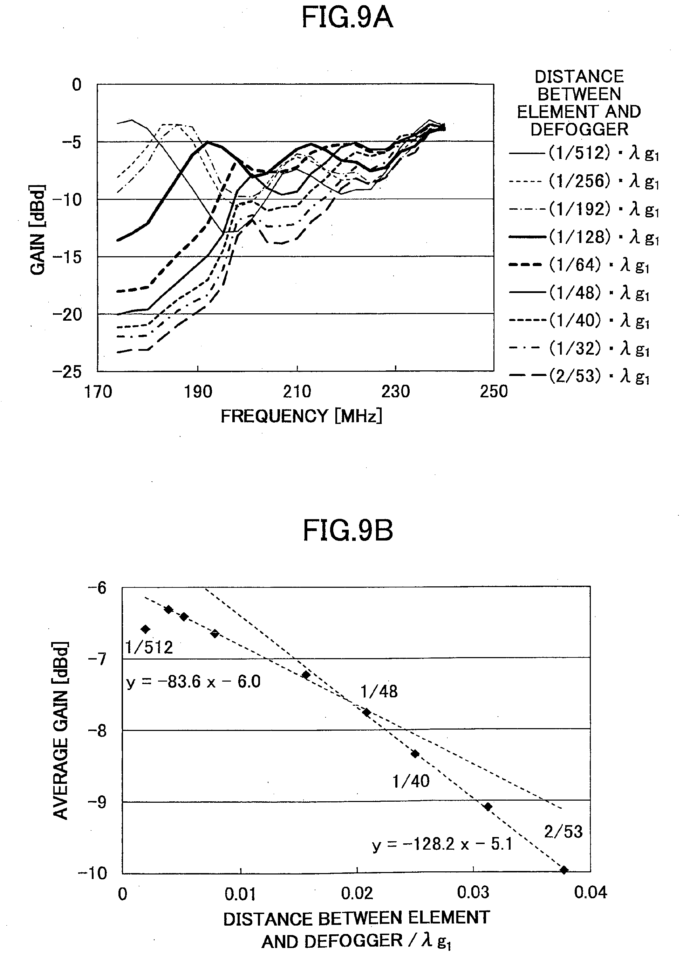

FIG. 9A is a graph indicating the antenna gain for each frequency in the band III while varying a distance between the antenna element 1 of the vehicle antenna illustrated in FIG. 3 and the heater line 22l of the defogger (DEF) 20, which is the closest to the antenna element 1 among the heater lines 22 of the defogger (DEF) 20.

FIGS. 9A and 9B, and Table 2 represent actually measured data of the vehicle glass antenna, which was produced by installing the glass antenna 10 according to the embodiment, which is illustrated in FIG. 3, on the rear glass of the actual vehicle. FIG. 9A indicates the average gain for the band III (from 174 MHz to 240 MHz), which was obtained by varying the distance [mm] between the antenna element 1 and the closest heater line 22l of the defogger 20 to be (1/512)·λ_{g1}, (1/256)·λ_{g1}, (1/192)·λ_{g1}, (1/128)·λ_{g1}, (1/64)·λ_{g1}, (1/48)·λ_{g1}, (1/40)·λ_{g1}, (1/32)·λ_{g1}, and (2/53)·λ_{g1}, while fixing the conductor length L1 to be to (1/32)·λ_{g1}. In FIG. 9A, the horizontal axis represents the frequency [MHz], and the vertical axis represents the average gain [dBd]. The average gain represents an average value that was obtained by averaging the values of the antenna gain, which were obtained by measuring for each rotational angle of 3 degrees in the above-described band.

In this example, the sizes other than the size of the glass antenna 10 is the same as those of Example 1.

Here, Table 2 shows, for each distance D1 between the antenna element and the defogger (the antenna element 1 and the the heater line 22l, which is the closest to the antenna element) illustrated in the graph of FIG. 9A, the average value of the gain over the entire band III.

**[Table 2]**

| Distance between antenna and DEF | Average |
|---|---|
| (1/512)·λ_{g1} | -6.6 |
| (1/256)·λ_{g1} | -6.3 |
| (1/192)·λ_{g1} | -6.4 |
| (1/128)·λ_{g1} | -6.6 |
| (1/64)·λ_{g1} | -7.2 |
| (1/48)·λ_{g1} | -7.8 |
| (1/40)·λ_{g1} | -8.3 |
| (1/32)·λ_{g1} | -9.1 |
| (2/53)·λ_{g1} | -10.0 |

From Table 2, it can be seen that, as the distance between the antenna element and the defogger increases, the average gain decreases. The decreasing rate becomes greater if the distance between the antenna element and the defogger exceeds (1/48)·λ_{g1}.

FIG. 9B is a plot illustrating a correlation between the distance D1 between the antenna element and the defogger and the minimum value of the gain in the band III.

In the plot of FIG. 9B, by drawing an approximate curve of the amount of change of the average gain, as a response to varying the closest distance between the antenna element 1 and the heater line 22l, it can be seen that the gradient is changed at the point of (1/48)·λ_{g1}. It can be seen that, at least for the closest distance between the antenna element 1 and the heater line 22l that is greater than (1/48)·λ_{g1}, the average gain decreases at a high rate, as the separation distance between the antenna element 1 and the heater line 22l, which is the closest to the antenna element 1 among the heater lines 22 of the defogger 20, becomes greater.

FIG. 9A, FIG. 9B, and Table 2 represent actually measured data. Thus, by considering an error on the measurement, the distance D1 between the antenna element 1 and the heater line 22l, which is the closest to the antenna element 1 among the heater lines 22 of the defogger 20, may preferable be less than or equal to (1/40)·λ_{g1}. Furthermore, as illustrated in FIG. 9B, the distance D1 may more preferably be less than or equal to (1/48)·λ_{g1}.

### ((Example 3))

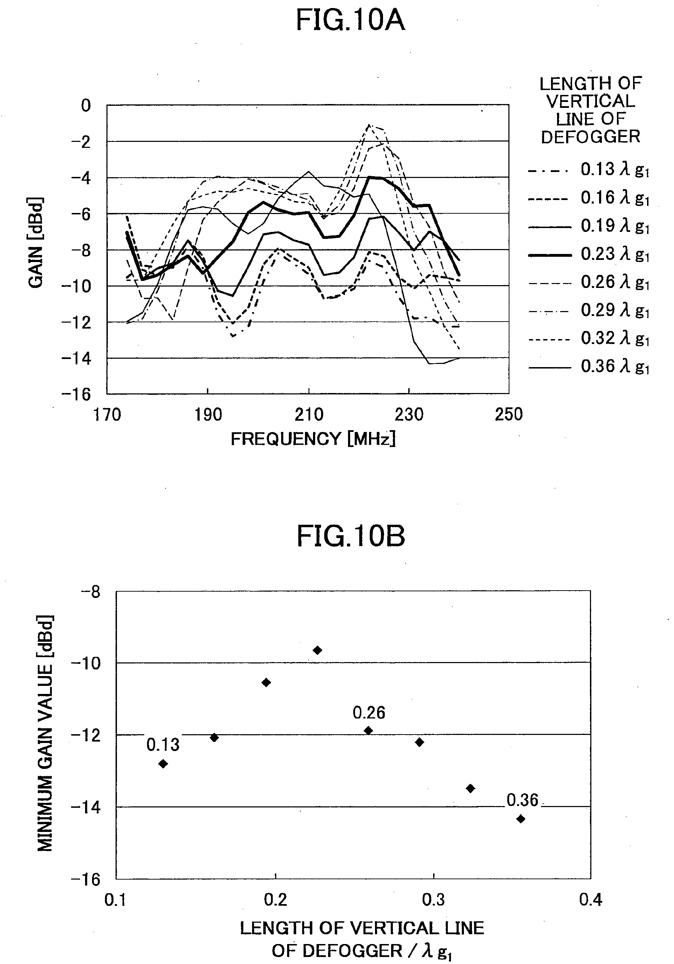

FIG. 10A is a graph indicating the antenna gain for each frequency in the band III while varying a length of the heater vertical line 23 of the defogger 20A in the vehicle antenna illustrated in FIG. 5.

FIGS. 10A and 10B, and Table 3 represent actually measured data of the vehicle glass antenna, which was produced by installing the glass antenna according to the embodiment, which is illustrated in FIG. 5, on the rear glass of the actual vehicle. FIG. 10A indicates the average gain for the band III (from 174 MHz to 240 MHz), which was obtained by varying the length of the heater vertical line 23 to be 0.13·λ_{g1}, 0.16·λ_{g1}, 0.19·λ_{g1}, 0.26·λ_{g1}, 0.29·λ_{g1}, 0.32·λ_{g1}, and 0.36·λ_{g1}, while fixing the conductor length L1 to be (1/32)·λ_{g1}. In FIG. 10A, the horizontal axis represents the frequency [MHz], and the vertical axis represents the average gain [dBd]. The average gain represents an average value that was obtained by averaging the values of the antenna gain, which were obtained by measuring for each rotational angle of 3 degrees in the above-described band.

According to the embodiment of the present invention, there is provided a horizontal pattern (a lateral pattern) where the horizontal component is elongated. In the shape of the embodiment of FIG. 5, the sizes of the window glass, etc., in unit of mm are as follows:
glass vertical height: 281,
glass horizontal width: 490,
opening Oh: 440, and
defogger vertical length Dh17: 360, where the installation angle of the window is 35 degrees. In the antenna configuration, the conductor length is fixed to be (1/32)·λ_{g1}, and the distance D1 between the antenna element and the defogger is fixed to be (1/192)·λ_{g1}. The configuration of the feeding point is the same as that of the above-described embodiment.

Here, Table 3 shows, for each length of the heater vertical line 23 illustrated in FIG. 10A, the average value of the gain over the entire band III.

**[Table 3]**

| Length of vertical line of defogger | Average |
|---|---|
| 0.13·λ_{g1} | -12.8 |
| 0.16·λ_{g1} | -12.1 |
| 0.19·λ_{g1} | -10.5 |
| 0.23·λ_{g1} | -9.6 |
| 0.26·λ_{g1} | -11.9 |
| 0.29·λ_{g1} | -12.2 |
| 0.32·λ_{g1} | -13.5 |
| 0.36·λ_{g1} | -14.3 |

It can be seen from Table 3 that, if the length L23 of the heater vertical line 23 of the defogger is close to (1/4)·λ_{g1} (i.e., 0.19·λ_{g1}, 0.23·λ_{g1}, and 0.26·λ_{g1}), the gain is enhanced.

FIG. 10B is a plot illustrating a correlation between the length L23 of the heater vertical line 23 of the defogger 20 and the minimum value of the gain in the band III.

In the plot of FIG. 10B, by drawing an approximate curve of the amount of change of the average gain, as a response to varying the length L23 of the heater vertical line 23, it can be seen that the gradient is changed at the points in the vicinity of (1/4)·λ_{g1}, which are 0.19·λ_{g1}. 0.23·λ_{g1}. and 0.26·λ_{g1}. It can be seen that, at least for a case where the length L23 of the heater vertical line 23 is in the vicinity of (1/4)·λ_{g1}, the average gain is enhanced, as a result of disposing the heater vertical line 23.

FIG. 10A, FIG. 10B, and Table 3 represent actually measured data. Thus, by considering an error on the measurement, the length L23 of the heater vertical line 23 of the defogger 20 may preferably be in a range of (1/4)·λ_{g1} ± 50%. Furthermore, as illustrated in FIG. 10B, the length L23 of the heater vertical line 23 of the defogger 20 may more preferably be from 0.16·λ_{g1} to 0.30·λ_{g1}.

### ((Example 4))

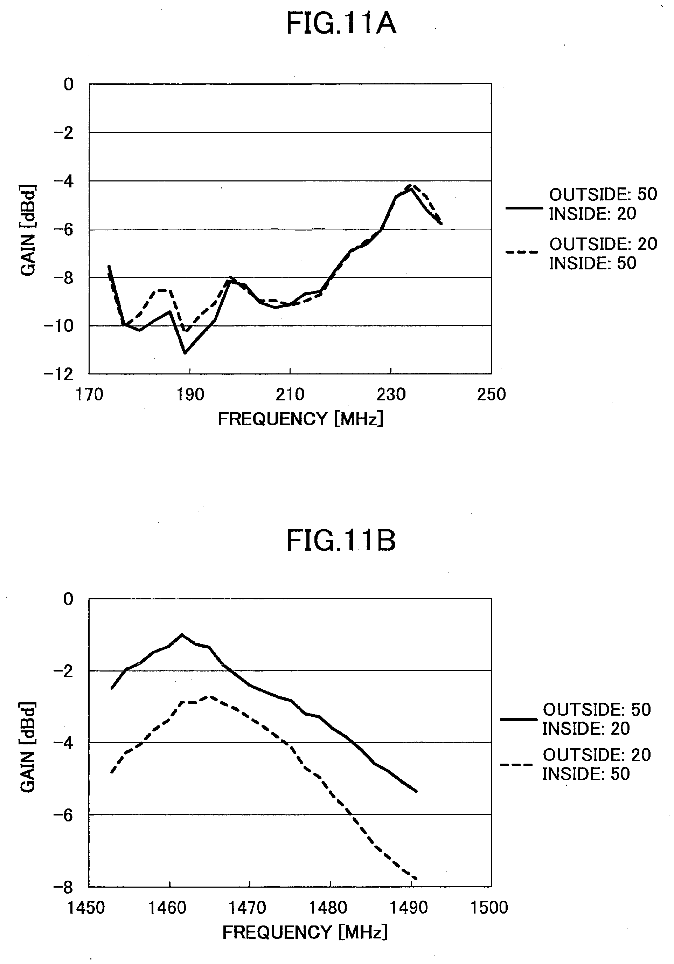

FIG. 11A is a graph illustrating, for the vehicle antenna illustrated in FIG. 7, the antenna gain at each frequency of the band III while varying a conductor length of an inner antenna element and a conductor length of an outer antenna element. FIG. 11B is a graph illustrating, for the vehicle antenna illustrated in FIG. 7, the antenna gain at each frequency of the L band while varying the conductor length of the inner antenna element and the conductor length of the outer antenna element. Here, the inner antenna element is closer to the heater line; and the outer antenna element is separated from the heater line, compared to the inner antenna element.

In this example, for each rotation angle of 3 degrees, the data of the antenna gain was measured for every 3 MHz in the frequency range of the band III (from 174 MHz to 240 MHz), and the data of the antenna gain was measured for every 1.8 MHz in the frequency range of the L band (from 1452 MHz to 1492 MHz).

In this example, the sizes of the components of the glass antenna 11 other than the antenna element 2 are the same as the above-described embodiment (cf. FIG. 3, for example).

A comparison is made between a case where the outer antenna element is longer (outside: 50 mm, inside: 20 mm) and a case where the inner antenna element is longer (outside: 20 mm, inside: 50 mm). It can be seen from FIG. 11A that, in the band III, if the antenna element 1 that is closer to the defogger 20 is longer, the effect to enhance the gain is large.

Referring to FIG. 7, for a case where the second antenna element 2 is provided, the length of the second antenna element 2 may be shorter than the length of the first antenna element 1; and the first antenna element 1 and the second antenna element 2 may be arranged parallel to the heater line 221, which is the closest to the first and second antenna elements 1 and 2 among the heater lines 22 of the defogger 20.

The antenna element that is the closest to the heater line 22l can make strong capacitive coupling with the heater line 22l, so that receiver sensitivity of the antenna element that is the closest to the heater line 22l for receiving vertically polarized waves tends to be enhanced by the capacitive coupling with the defogger 20.

For example, in FIGS. 11A and 11B, the solid line indicates the antenna gain for the case where the outer side (the lower side in FIG. 7) is the first antenna element 1, and the inner side (the upper side in FIG. 7) is the second antenna element 2; and the dotted line indicates the antenna gain for the case where the outer side is the second antenna element 2, and the inner side is the first antenna element 1.

Here, Table 4 shows, for the gain in the graphs of FIG. 11A and FIG. 11B, the average value of the gain over the entire band III, and the average value of the gain over the entire L band.

As illustrated in FIG. 11A, in the band III, the gain is enhanced if the first antenna element 1 with large conductor length is disposed at the inner side. Whereas, as illustrated in FIG. 11B, in the L band, the gain is enhanced if the first antenna element 1 with large conductor length is disposed at the outer side.

**[Table 4]**

| | Band III average | L Band average | Band III average - L Band average |
|---|---|---|---|
| outer element 50 mm | -7.7 | -2.6 | -5.0 |
| inner element 20 mm | | | |
| outer element 20 mm | -7.5 | -4.4 | -3.1 |
| inner element 50 mm | | | |

As shown in FIG. 11A, FIG. 11B, and Table 4, if the inner antenna element is long, and the outer antenna element is short, the difference between the averages becomes small. Here, in general, as an antenna, the minimum value of the gain may preferably be greater than or equal to -12 dB.

For example, in the band III illustrated in FIG. 11A, the minimum value of the gain at the frequency of 189 MHz is -11.1 dB for the case where the outer side is the first antenna element 1; and -10.3 dB for the case where the inner side is the first antenna element 1.

Further, in the L band illustrated in FIG. 11B, the minimum value of the gain at the frequency of 1491 MHz is -5.4 dB for the case where the outer side is the first antenna element 1; and -7.8 dB for the case where the inner side is the first antenna element 1. Consequently, it is preferable that the gain can be increased in the band III where the margin of the minimum value with respect to the desired value (-12 dB) is the smaller.

Thus, for the case where the two antenna elements are provided, in order to enhance the performance for the band III, the glass antenna may preferably be configured such that the first antenna element 1 with the large conductor length is installed at a position closer to the heater line 22l (22u) at the outer most position of the defogger 20. In this case, the first antenna element 1 is disposed between the whole second antenna element 2 and the heater line 22l.

Note that, for a case where the reception performance for the L band is to be emphasized, the positions of the first antenna element 1 and the second antenna element 2 may be reversed, so that the second antenna element 2 is disposed closer to the heater line 22l.

## Claims

1. A rear window glass (60) for a vehicle, comprising:
an electric heating type defogger (20) installed in the rear window glass (60); and
a glass antenna (10) for receiving a vertically polarized wave of DAB,
wherein the defogger (20) includes a plurality of heater lines (22) extending in a horizontal direction, the heater lines (22) being arranged from a lower side of the rear window glass (60) to an upper side of the rear window glass (60); and a plurality of bus bars (21) extending in a vertical direction at a left edge portion of the window glass (60) and at a right edge portion of the window glass (60), and that feed power to the plurality of heater lines (22),
wherein the glass antenna (10) is disposed at an upper portion or a lower portion with respect to the defogger (20), at least, at one of the left edge portion and the right edge portion of the rear window glass (60),
wherein the glass antenna (10) comprises:
a core side feeding point (8); and
a first antenna element (1) extending from the core side feeding point (8) in the horizontal direction,
wherein, if a wavelength at a center frequency of a received frequency band in air is λ, a glass wavelength shortening coefficient is k, and a wavelength on the rear window glass (60) is λ_{g} =λ·k, a conductor length (L1) of the first antenna element (1) is less than or equal to (1/6)·λ_{g}, and wherein a distance (D1) between the first antenna element (1) and a first heater line (22l) that extends linearly in the horizontal direction from the bus bar (21) at the left edge portion of the window glass (60) to the bus bar (21) at the right edge portion of the window glass (60) and that is closest to the first antenna element (1) among the plurality of heater lines (22) is less than or equal to (1/40)·λ_{g}.

2. The rear window glass (60) according to claim 1, wherein the conductor length (L1) of the first antenna element (1) is less than or equal to (1/8)·λ_{g}.

3. The rear window glass (60) according to claim 1 or 2, wherein the first antenna element (1) is capacitively coupled with the first heater line (22l), and wherein the glass antenna (10) receives a vertically polarized wave in a band III of the DAB.

4. The rear window glass (60) according to any one of claims 1 to 3, wherein the feeding point includes the core side feeding point (8), and a ground side feeding point (9), the ground side feeding point (9) being arranged together with the core side feeding point (8) in a horizontal direction.

5. The rear window glass (60) according to any one of claims 1 to 4, wherein the first antenna element (1) extends from the core side feeding point (8) toward a center line of the rear window glass (60) with respect to a width direction of the vehicle.

6. The rear window glass (60) according to any one of claims 1 to 5, further comprising:
a second antenna element (2) that extends from the core side feeding point (8), wherein the second antenna element (2) receives a vertically polarized wave in a frequency band that differs from that of the first antenna element (1).

7. The rear window glass (60) according to claim 6, wherein the second antenna element (2) is shorter than the first antenna element (1),
wherein the first antenna element (1) and the second antenna element (2) extend parallel to the first heater line (22l), wherein the first antenna element (1) and the second antenna element (2) are arranged in parallel in a vertical direction, and
wherein the first antenna element (1) is disposed closer to the first heater line (22l), compared to the second antenna element (2).

8. The rear window glass (60) according to any one of claims 1 to 7, wherein the defogger (20) includes a heater vertical line (23) that intersects the plurality of heater lines (22) in the vertical direction, and
wherein, if the wavelength at the center frequency of the received frequency band in the air is λ, the glass wavelength shortening coefficient is k, and the wavelength on the rear window glass (60) is λ_{g} =λ·k, a length of the heater vertical line (23) is greater than or equal to (1/8)·λ_{g} and less than or equal to (3/8)·λ_{g}.

9. A vehicle comprising the rear window glass (60) according to any one of claims 1 to 8, wherein the vehicle is a hatchback type.

10. The vehicle according to claim 9, wherein a rear door is attached to a rear portion of the vehicle, so that the rear door can be opened and closed, wherein an opening (72) for viewing backward is formed in the rear door,
wherein the rear window glass (60) is attached to the rear door to cover the opening (72), and
wherein a distance between the first heater line (22l) and a lower edge portion or an upper edge portion of the opening (72) facing the first heater line (22l) is less than a length of the first antenna element (1).

11. The vehicle according to claim 9, wherein a rear door is attached to a rear portion of the vehicle, so that the rear door can be opened and closed, wherein a first opening (74) is formed in the rear door,
wherein a resin panel (73) is attached to the rear door to cover the first opening (74),
wherein, in the resin panel (73), a second opening (72B) for viewing backward is formed, the second opening (72B) being smaller than the first opening (74), wherein the rear window glass (60) is attached to the rear door to cover the second opening (72B), and
wherein a distance between the first heater line (22l) and a lower edge portion or an upper edge portion of the second opening (72B) facing the first heater line (22l) is less than a length of the first antenna element (1).

## Patentansprüche

1. Heckfensterscheibe (60) für ein Fahrzeug, umfassend:
eine elektrisch beheizbare Scheibenheizung (20), eingerichtet in der Heckfensterscheibe (60), und
eine Scheibenantenne (10) zum Empfangen einer vertikal polarisierten Welle von DAB,
wobei die Scheibenheizung (20) eine Mehrzahl von Heizdrähten (22), welche sich in einer horizontalen Richtung erstrecken, wobei die Heizdrähte (22) von einer unteren Seite der Heckfensterscheibe (60) hin zu einer oberen Seite der Heckfensterscheibe (60) angeordnet sind, und eine Mehrzahl von Stromführungsschienen (21), welche sich in einer vertikalen Richtung an einem linken Randbereich der Fensterscheibe (60) und an einem rechten Randbereich der Fensterscheibe (60) erstrecken und welche die Mehrzahl von Heizdrähten (22) mit Strom versorgen, einschließt,
wobei die Scheibenantenne (10) an einem oberen Bereich oder einem unteren Bereich in Bezug auf die Scheibenheizung (20) an mindestens einem des linken Randbereiches und des rechten Randbereiches der Heckfensterscheibe (60) angeordnet ist,
wobei die Scheibenantenne (10) umfasst:
einen kernseitigen Einspeisungspunkt (8) und
ein erstes Antennenelement (1), welches sich von dem kernseitigen Einspeisungspunkt (8) in der horizontalen Richtung erstreckt,
wobei, falls eine Wellenlänge an einer Mittenfrequenz des empfangenen Frequenzbandes in Luft λ ist, ein Wellenlängenverkürzungskoeffizient für die Scheibe k ist und eine Wellenlänge auf der Heckfensterscheibe (60) λ_{g} =λ·k ist, eine Leiterlänge (L1) des ersten Antennenelements (1) weniger als oder gleich (1/6)·λ_{g} ist und wobei ein Abstand (D1) zwischen dem ersten Antennenelement (1) und einem ersten Heizdraht (22l), welcher sich linear in der horizontalen Richtung von der Stromführungsschiene (21) an dem linken Randbereich der Fensterscheibe (60) zu der Stromführungsschiene (21) an dem rechten Randbereich der Fensterscheibe (60) erstreckt und welcher dem ersten Antennenelement (1), unter der Mehrzahl von Heizdrähten (22), am nächsten ist, weniger als oder gleich (1/40)·λ_{g} ist.

2. Heckfensterscheibe (60) nach Anspruch 1, wobei die Leiterlänge (L1) des ersten Antennenelements (1) weniger als oder gleich (1/8)·λ_{g} ist.

3. Heckfensterscheibe (60) nach Anspruch 1 oder 2, wobei das erste Antennenelement (1) kapazitiv mit dem ersten Heizdraht (22l) gekoppelt ist und wobei die Scheibenantenne (10) eine vertikal polarisierte Welle in einem Band III des DAB empfängt.

4. Heckfensterscheibe (60) nach einem der Ansprüche 1 bis 3, wobei der Einspeisungspunkt den kernseitigen Einspeisungspunkt (8) und einen grundseitigen Einspeisungspunkt (9) einschließt, wobei der grundseitige Einspeisungspunkt (9) zusammen mit dem kernseitigen Einspeisungspunkt (8) in einer horizontalen Richtung angeordnet ist.

5. Heckfensterscheibe (60) nach einem der Ansprüche 1 bis 4, wobei sich das erste Antennenelement (1) von dem kernseitigen Einspeisungspunkt (8) in Richtung einer Mittenlinie der Heckfensterscheibe (60) in Bezug auf eine Breitenrichtung des Fahrzeuges erstreckt.

6. Heckfensterscheibe (60) nach einem der Ansprüche 1 bis 5, weiter umfassend:
ein zweites Antennenelement (2), welches sich von dem kernseitigen Einspeisungspunkt (8) erstreckt, wobei das zweite Antennenelement (2) eine vertikal polarisierte Welle in einem Frequenzband, welches sich von demjenigen des ersten Antennenelements (1) unterscheidet, empfängt.

7. Heckfensterscheibe (60) nach Anspruch 6, wobei das zweite Antennenelement (2) kürzer als das erste Antennenelement (1) ist,
wobei sich das erste Antennenelement (1) und das zweite Antennenelement (2) parallel zu dem ersten Heizdraht (22l) erstrecken, wobei das erste Antennenelement (1) und das zweite Antennenelement (2) nebeneinander in einer vertikalen Richtung angeordnet sind und
wobei das erste Antennenelement (1) näher bei dem ersten Heizdraht (22l) angeordnet ist, verglichen mit dem zweiten Antennenelement (2).

8. Heckfensterscheibe (60) nach einem der Ansprüche 1 bis 7, wobei die Scheibenheizung (20) einen Heizvertikaldraht (23), welcher die Mehrzahl von Heizdrähten (22) in der vertikalen Richtung kreuzt, einschließt und
wobei, falls die Wellenlänge an der Mittenfrequenz des empfangenen Frequenzbandes in der Luft λ ist, der Wellenlängenverkürzungskoeffizient für die Scheibe k ist und die Wellenlänge auf der Heckfensterscheibe (60) λ_{g} =λ·k ist, eine Länge des Heizvertikaldrahts (23) größer als oder gleich (1/8)·λ_{g} und weniger als oder gleich (3/8)·λ_{g} ist.

9. Fahrzeug, umfassend die Heckfensterscheibe (60) nach einem der Ansprüche 1 bis 8, wobei das Fahrzeug ein Schrägheckmodell ist.

10. Fahrzeug nach Anspruch 9, wobei eine Hecktür an einem Heckbereich des Fahrzeuges derart angebracht ist, dass die Hecktür geöffnet und geschlossen werden kann, wobei eine Öffnung (72) zum Rückwärtsschauen in der Hecktür gebildet ist,
wobei die Heckfensterscheibe (60) an der Hecktür angebracht ist, um die Öffnung (72) zu bedecken, und
wobei ein Abstand zwischen dem ersten Heizdraht (22l) und einem unteren Randbereich oder einem oberen Randbereich der Öffnung (72), welcher dem ersten Heizdraht (22l) gegenüberliegt, weniger als eine Länge des ersten Antennenelements (1) ist.

11. Fahrzeug nach Anspruch 9, wobei eine Hecktür an einem Heckbereich des Fahrzeuges derart angebracht ist, dass die Hecktür geöffnet und geschlossen werden kann, wobei eine erste Öffnung (74) in der Hecktür gebildet ist,
wobei eine Harzplatte (73) an der Hecktür angebracht ist, um die erste Öffnung (74) zu bedecken,
wobei in der Harzplatte (73) eine zweite Öffnung (72B) zum Rückwärtsschauen gebildet ist, wobei die zweite Öffnung (72B) kleiner als die erste Öffnung (74) ist,
wobei die Heckfensterscheibe (60) an der Hecktür angebracht ist, um die zweite Öffnung (72B) zu bedecken, und
wobei ein Abstand zwischen dem ersten Heizdraht (22l) und einem unteren Randbereich oder einem oberen Randbereich der zweiten Öffnung (72B), welcher dem ersten Heizdraht (22l) gegenüberliegt, weniger als eine Länge des ersten Antennenelements (1) ist.

## Revendications

1. Vitre de lunette arrière (60) pour un véhicule, comprenant :
un dégivreur du type à chauffage électrique (20) installé dans la vitre de lunette arrière (60) ; et
une antenne de vitre (10) pour recevoir une onde polarisée verticalement de DAB,
dans laquelle le dégivreur (20) comprend une pluralité de lignes chauffantes (22) s'étendant dans une direction horizontale, les lignes chauffantes (22) étant agencées depuis un côté inférieur de la vitre de lunette arrière (60) vers un côté supérieur de la vitre de lunette arrière (60) ; et une pluralité de barres collectrices (21) s'étendant dans une direction verticale au niveau d'une partie de bord gauche de la vitre (60) et au niveau d'une partie de bord droit de la vitre (60), et qui fournissent de l'électricité à la pluralité de lignes chauffantes (22),
dans laquelle l'antenne de vitre (10) est disposée au niveau d'une partie supérieure ou d'une partie inférieure par rapport au dégivreur (20), au moins, au niveau de l'une parmi la partie de bord gauche et la partie de bord droit de la vitre de lunette arrière (60),
dans laquelle l'antenne de vitre (10) comprend :
un point d'alimentation du côté noyau (8) ; et
un premier élément d'antenne (1) s'étendant depuis le point d'alimentation du côté noyau (8) dans la direction horizontale,
dans laquelle, si la longueur d'onde au niveau d'une fréquence centrale d'une bande de fréquences reçue dans l'air est λ, le coefficient de raccourcissement de longueur d'onde du verre est k, et la longueur d'onde sur la vitre de lunette arrière (60) est λ_{g} = λ•k, la longueur de conducteur (L1) du premier élément d'antenne (1) est inférieure ou égale à (1/6)•λ_{g}, et dans laquelle la distance (D1) entre le premier élément d'antenne (1) et une première ligne chauffante (22) qui s'étend linéairement dans la direction horizontale depuis la barre collectrice (21) au niveau de la partie de bord gauche de la vitre vers la barre collectrice (21) au niveau de la partie de bord droit de la vitre (60) et qui est la plus proche du premier élément d'antenne (1) parmi la pluralité des lignes chauffantes (22) est inférieure ou égale à (1/40)•λ_{g}.

2. Vitre de lunette arrière (60) selon la revendication 1, dans laquelle la longueur de conducteur (L1) du premier élément d'antenne (1) est inférieure ou égale à (1/8)•λ_{g}.

3. Vitre de lunette arrière (60) selon la revendication 1 ou 2, dans laquelle le premier élément d'antenne (1) est couplé de manière capacitive à la première ligne chauffante (221), et dans laquelle l'antenne de vitre (10) reçoit une onde polarisée verticalement dans une bande III du DAB.

4. Vitre de lunette arrière (60) selon l'une quelconque des revendications 1 à 3, dans laquelle le point d'alimentation comprend le point d'alimentation du côté noyau (8), et un point d'alimentation du côté terre (9), le point d'alimentation du côté terre (9) étant agencé conjointement avec le point d'alimentation du côté noyau (8) dans une direction horizontale.

5. Vitre de lunette arrière (60) selon l'une quelconque des revendications 1 à 4, dans laquelle le premier élément d'antenne (1) s'étend depuis le point d'alimentation du côté noyau (8) en direction d'une ligne centrale de la vitre de lunette arrière (60) par rapport à la direction de la largeur du véhicule.

6. Vitre de lunette arrière (60) selon l'une quelconque des revendications 1 à 5, comprenant en outre :
un deuxième élément d'antenne (2) qui s'étend depuis le point d'alimentation du côté noyau (8), lequel deuxième élément d'antenne (2) reçoit une onde polarisée verticalement dans une bande de fréquences qui diffère de celle du premier élément d'antenne (1).

7. Vitre de lunette arrière (60) selon la revendication 6, dans laquelle le deuxième élément d'antenne (2) est plus court que le premier élément d'antenne (1),
dans laquelle le premier élément d'antenne (1) et le deuxième élément d'antenne s'étendent parallèlement à la première ligne chauffante (221),
dans laquelle le premier élément d'antenne (1) et le deuxième élément d'antenne (2) sont agencés en parallèle dans la direction verticale, et
dans laquelle le premier élément d'antenne (1) est disposé plus proche de la première ligne chauffante (221) que le deuxième élément d'antenne (2).

8. Vitre de lunette arrière (60) selon l'une quelconque des revendications 1 à 7, dans laquelle le dégivreur (20) comprend une ligne verticale chauffante (23) qui croise la pluralité de lignes chauffantes (22) dans la direction verticale, et
dans laquelle, si la longueur d'onde à la fréquence centrale de la bande de fréquences reçue dans l'air est λ, le coefficient de raccourcissement de longueur d'onde du verre est k, et la longueur d'onde sur la vitre de lunette arrière (60) est λ_{g} = λ•k, la longueur de la ligne verticale chauffante (23) est supérieure ou égale à (1/8)•λ_{g} et inférieure ou égale à (3/8)•λ_{g}.

9. Véhicule comprenant la vitre de lunette arrière (60) selon l'une quelconque des revendications 1 à 8, lequel véhicule est de type à hayon.

10. Véhicule selon la revendication 9, dans lequel une porte arrière est attachée à une partie arrière du véhicule, de façon que la porte arrière puisse être ouverte et fermée, dans lequel une ouverture (72) pour regarder vers l'arrière est formée dans la porte arrière,
dans lequel la vitre de lunette arrière (60) est attachée à la porte arrière de manière à couvrir l'ouverture (72), et
dans lequel la distance entre la première ligne chauffante (221) et une partie de bord inférieur ou une partie de bord supérieur de l'ouverture (72) faisant face à la première ligne chauffante (221) est inférieure à la longueur du premier élément d'antenne (1).

11. Véhicule selon la revendication 9, dans lequel une porte arrière est attachée à une partie arrière du véhicule, de façon que la porte arrière puisse être ouverte et fermée, dans lequel une première ouverture (74) est formée dans la porte arrière,
dans lequel un panneau en résine (73) est attaché à la porte arrière pour couvrir la première ouverture (74),
dans lequel, dans le panneau en résine (73), une deuxième ouverture (72B) pour regarder vers l'arrière est formée, la deuxième ouverture (72B) étant plus petite que la première ouverture (74),
dans lequel la vitre de lunette arrière (60) est attachée à la porte arrière de manière à couvrir la deuxième ouverture (72B), et
dans lequel la distance entre la première ligne chauffante (221) et une partie de bord inférieur ou une partie de bord supérieur de la deuxième ouverture (72B) faisant face à la première ligne chauffante (221) est inférieure à la longueur du premier élément d'antenne (1).
